# EUROPÄISCHE PATENTSCHRIFT

(11) **EP 0 769 393 B1**
(45) Veröffentlichungstag und Bekanntmachung des Hinweises auf die Patenterteilung: **29.12.1999**
(21) Anmeldenummer: 96116492.8
(22) Anmeldetag: 15.10.1996
(51) Int. Cl.: B42F 7/14

(54) **Vorrichtung zur Aufbewahrung von Informationsmaterial**
Device for storing record carriers
Dispositif pour emmagasiner du matériau contenant de l'information

(30) Priorität: 18.10.1995 DE 29516486 U
(43) Veröffentlichungstag der Anmeldung: 23.04.1997
(73) Patentinhaber: Dallmer GmbH & Co., D-59757 Arnsberg (DE)
(72) Erfinder: Dallmer, Johannes, 59757 Arnsberg (DE)
(74) Vertreter: Fritz, Edmund Lothar, Dipl.-Chem.

(56) Entgegenhaltungen:
- DE-A- 4 133 465
- US-A- 4 518 275
- US-A- 5 190 127

## Beschreibung

Die vorliegende Erfindung betrifft eine Vorrichtung zur Aufbewahrung von Informationsmaterial.

Solche Vorrichtungen werden häufig von z.B. Firmen oder Vertretern benötigt, um ihren Kunden Informationsmaterial zukommen zu lassen bzw. zur Verfügung zu stellen. Diese Informationen können z.B. Firmeninformationen bzw. Produktinformationen in Form von Ringbüchern, Katalogen oder dergleichen sein, die unter Umständen mit Hilfe von Compact-Disc's (CD's) noch vervollständigt oder abgerundet werden sollen. Mittlerweile wird das Zurverfügungstellen von solchen Druckschriften zusammen mit elektronischen Informationen wie z.B. in Form von CD's immer üblicher. Normalerweise werden hierfür Präsentationsmappen eingesetzt, die Druckschriften und auch einer CD Platz bieten.

Diese bekannten Aufbewahrungsmöglichkeiten haben jedoch den Nachteil, daß die Druckschriften zusammen mit der CD ungeordnet aufbewahrt werden und somit ein schnelles Auffinden der gewünschten Information, vor allem einer CD, erschwert wird. Darüber hinaus wird ein unbeabsichtigtes Verlegen bzw. Verlieren der CD begünstigt, da dieser in den bekannten und üblichen Aufbewahrungsmöglichkeiten kein gesonderter bzw. fester Platz zur Verfügung gestellt wird.

Eine Vorrichtung zur Aufbewahrung von Informationsmaterial der eingangs genannten Art ist aus der US-Patentschrift US-A-4,518,275 bekannt. Die darin beschriebene Vorrichtung umfaßt einen größeren Behälter, in dem ein kleineres Behältnis angeordnet ist, das zur Aufnahme von CD's geignet ist. In den größeren Behälter sind beispielsweise Druckschriften einbringbar, wobei eine Zugangsmoglichkeit zum größeren Behälter unabhängig vom kleineren Behälter vorliegt. Der kleinere Behälter ist nicht unabhängig von dem größeren Behälter zugänglich, da zuerst der größere Behälter geöffnet werden muß, um an den kleineren Behälter zu gelangen.

Der Erfindung liegt daher die Aufgabe zugrunde, eine Vorrichtung zur Aufbewahrung von Katalogen oder dergleichen und CD's zu entwickeln, die ein schnelles und sicheres Auffinden sowohl von Papierinformationen als auch von CD's ermöglicht.

Diese Aufgabe wird erfindungsgemäß dadurch gelöst, daß eine Zugangsmöglichkeit zum kleineren Behältnis unabhängig von einer Zugangsmöglichkeit zum größeren Behälter vorliegt, wobei das kleinere Behältnis von außen zugänglich ist. Dadurch wird ein evtl. notwendiges Stapeln oder Aneinanderlegen mehrerer solcher Vorrichtungen z.B. in einem Regal platzsparend und sicher ermöglicht und eine schnelle Entnahme der CD kann im Bedarfsfall auch ohne Öffnen der gesamten Vorrichtung erfolgen.

Der vorzugsweise aus einem Unterteil und einem aufklappbaren Deckelteil bestehende größere Behälter zur Aufnahme der Druckschriften läßt sich durch das Aufklappen des Deckelteils leicht öffnen und macht somit die aufbewahrten Druckschriften leicht zugänglich.

Das Deckelteil weist dabei zweckmäßig zwei Seitenwände auf, wobei das Unterteil zwei Längsseitenwände umfaßt und wobei die Seitenwände des Deckelteils in geschlossenem Zustand der Vorrichtung von außen über die Längsseitenwände des Unterteils greifen, so daß die Seitenwände des Deckelteils und die Längsseitenwände des Unterteils leicht eine zum Aufklappen des Deckelteils notwendige Drehachse aufnehmen können. Zum besseren Aufliegen des Deckelteils auf dem Unterteil weisen beide vorzugsweise schräge Auflageflächen auf.

Das kleinere Behältnis ist zweckmäßig mit dem Boden des größeren Behälters fest verbunden, so daß im großen Behälter abgelegte Druckschriften durch das kleine Behältnis abgestützt und in eine erhöhte Lage gebracht werden, was ein schnelles Greifen von abgelegten Druckschriften erleichtert.

Ferner ist das kleinere Behältnis zweckmäßig schräg zum Boden des größeren Behälters angebracht, wodurch der im größeren Behälter zur Verfügung stehende Platz, vor allem bei eingelegten Ringbüchern, maximal ausgenutzt und abgelegten Druckschriften eine definierte Auflage zur Verfügung gestellt wird. Des weiteren wird durch diese vorteilhafte Schräglage des Behältnisses ein unbeabsichtigtes Herausrutschen der CD erschwert.

Das kleinere Behältnis weist vorteilhaft Führungsleisten auf, die zum einen ein problemloses Einschieben einer CD gewährleisten, zum anderen ein Herausfallen einer CD in das Innere des größeren Behältnis verhindern.

Die Geometrie des kleineren Behältnis ist sinnvollerweise so gestaltet, daß eine voll eingeschobene CD noch etwas aus dem größeren Behälter herausragt und somit leicht zu entnehmen ist.

Dabei umfaßt das kleinere Behältnis eine Öffnung, die vorteilhaft in der vorderen Querseitenwand des größeren Behälters und zwar ungefähr in der Mitte von dieser mündet. Hierdurch wird ein allseitiges Greifen des herausragenden CD-Endes möglich. Insgesamt ist so ein leichtes stirnseitiges Herausziehen der CD, bei Aufbewahrung der Vorrichtung in einem Regal oder Schrank mit der Stirnseite nach vorne, auch ohne Entfernung der Vorrichtung von seinem Platz möglich.

Vorteilhaft ist ferner, wenn die vordere Querseitenwand des größeren Behälters und mit diesem das kleinere Behältnis soweit zur hinteren Querseitenwand des größeren Behälters hin versetzt ist, daß von den Seitenteilen, dem Boden und der Querleiste ein rechteckiger Rahmen gebildet wird, wobei eine weitmöglichst in das kleinere Behältnis eingeschobene CD nicht über die Flucht dieses Rahmens hinausragt. Dadurch kann das herausragende Ende der CD nicht stören und man könnte die Vorrichtung notfalls auch stirnseitig ganz an eine Wand stellen.

Das Deckelteil kann einstückig aus Kunststoff ausgeführt sein. Dies gilt ebenso für das Unterteil zusammen mit dem kleineren Behältnis. Hierdurch bietet sich dessen Herstellung im Spritzgußverfahren an, wodurch der Montageaufwand der Vorrichtung minimiert werden kann.

Aber auch wenn diese Fertigungstechnologie nicht zur Verfügung steht, können sowohl Deckelteil, Unterteil als auch das kleine Behältnis alternativ aus einfach herzustellenden Einzelteilen (Rechtecken bzw. Elementen) bestehen, die entsprechend bekannter Montage- bzw. Fügeverfahren zusammengebaut werden können.

Aus Gründen der Gewichtsersparnis bietet sich als Werkstoff für die Vorrichtung bzw. deren Einzelteile auch Aluminium an.

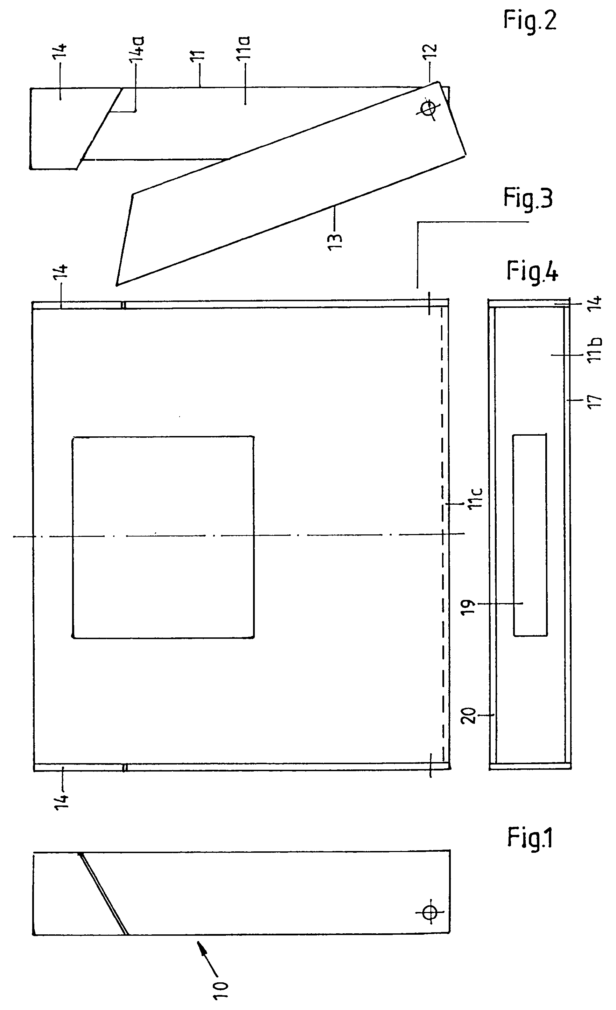

Im folgenden wird die vorliegende Erfindung anhand eines Ausführungsbeispiels unter Bezugnahme auf die beiliegenden Zeichnungen näher beschrieben. Dabei zeigen
- Fig. 1: eine Seitenansicht der erfindungsgemäßen Vorrichtung zur Aufbewahrung von Katalogen und Compact-Discs in geschlossenem Zustand;
- Fig. 2: eine Seitenansicht der Vorrichtung im leicht geöffneten Zustand;
- Fig. 3: eine entsprechende Bodenansicht der Vorrichtung gemäß Figur 1;
- Fig. 4: eine entsprechende Stirn-/Frontansicht der Vorrichtung gemäß Fig. 1;
- Fig. 5: eine Draufsicht der Vorrichtung gemäß Fig. 1, jedoch mit einem Ausbruch und sichtbarem Behältnis für die CD;
- Fig 6: eine seitliche Schnittansicht der Vorrichtung in geöffnetem Zustand gemäß Schnittlinie in Fig. 5.

Die erfindungsgemäße Vorrichtung zur Aufbewahrung von Katalogen oder dergleichen und CD's ist insgesamt mit 10 bezeichnet. Sie umfaßt ein kastenförmiges etwa rechteckiges und zu einer Seite hin offenes Unterteil 11 und ein mit diesem über eine Drehachse 12 gelenkig verbundenes, aufklappbares Deckelteil 13. Das Unterteil 11 hat zwei Längsseitenwände 11a, eine vordere Querseitenwand 11b, eine hintere Querseitenwand 11c und einen Boden 17. An den Längsseitenwänden befinden sich im Bereich der vorderen Querseitenwand seitlich angeformte zu den Längsseitenwänden 11a parallele Seitenteile 14 mit schräg angeformten Auflageflächen 14a, die im geschlossenen Zustand als Widerlager für die entsprechend geformten Schrägflächen 13b der Seitenwände 13a vom Deckelteil 13 dienen. Das Deckelteil 13 hat einen Deckel 16 mit rechteckigem Grundriß. Von diesem aus erstrecken sich senkrecht in Richtung auf das Unterteil 11 die Seitenwände 13a, die wie gesagt an einem Ende die Schrägen 13b aufweisen, und die Rückwandleiste 13c des Deckelteils 13. Das Deckelteil 13 ist also, abgesehen von den Schrägen, ebenfalls etwa kastenförmig, wobei bei geschlossenem Deckelteil die Seitenwände 13a die Längsseitenwände 11a des Unterteils 11 von außen überdecken und parallel zu diesen liegen.

Aus Figur 5 kann man erkennen, daß sich vom Boden 17 des Unterteils aus in Richtung auf das Deckelteil hin ein Behältnis 18 erstreckt, das der Aufbewahrung von CD's dient. Dieses Behältnis 18 hat zwei Längsseitenwände 18a, eine quer zu diesen verlaufende Rückwand 18b, die etwa in der Mitte zwischen der vorderen Querseitenwand 11b und der hinteren Querseitenwand 11c des Unterteils 11 liegt und knapp halb so lang ist wie eine der Querseitenwände 11b bzw. 11c. Von den beiden Länsseitenwänden 18a aus, rechtwinklig nach innen abgewinkelt, erstrecken sich außerdem obere Führungsleisten 18c, die ein Herausfallen einer eingeschobenen CD aus dem Behältnis 18 in das Innere des größeren Behälters verhindern sollen. Der Abstand der Rückwand 18b des Behältnisses 18 von der vorderen Querseitenwand 11b des Unterteils ist vorzugsweise so bemessen, daß eine vollständig in das Behältnis 18 eingeschobene CD immer noch etwas aus der Öffnung 19 der vorderen Querseitenwand 11b herausragt, so daß man sie zum Herausziehen mit der Hand leicht greifen kann.

Aus Figur 6 kann man erkennen, daß das Behältnis 18 in Bezug auf den Boden 17 des Unterteils nicht parallel sondern schräg angeordnet ist und zwar so, daß es an seinem der Drehachse 12 zugewandten Ende an den Boden 17 des Unterteils angrenzt, also dort wo sich die Rückwand 18b des Behältnisses 18 befindet, während es sich zu seinem anderen nach außen hin offenen Ende schräg vom Boden 17 des Unterteils weg erstreckt und in der schlitzartigen rechteckigen Öffnung 19 der vorderen Querseitenwand 11b des Unterteils 11 mündet und daher von außen zugänglich ist.

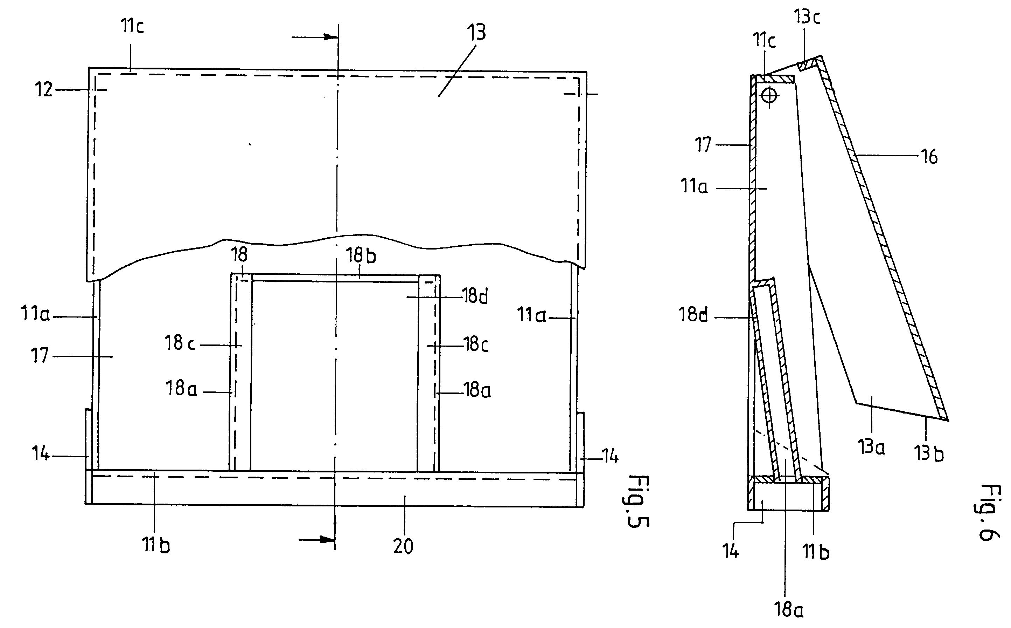

Wie man aus Figur 6 ferner erkennen kann, ist die vordere Querseitenwand 11b, in der sich die Öffnung 19 befindet gegenüber dem Boden 17 des Unterteils etwas zurückversetzt, so daß sich von der Stirnseite her schauend gemäß Fig. 4 ein rechteckiger Rahmen ergibt, der von den Seitenteilen 14, dem Boden 17 des Unterteils und der Querleiste 20 gebildet wird und allseitig umläuft. Dies hat zur Folge, daß bei vollständig eingeschobener CD diese zwar ein Stück aus der Öffnung 19 hervorragt, nicht jedoch über die Flucht des Rahmens hinausgeht. Das kastenförmige Unterteil 11 mit seinen beiden Längsseitenwänden 11a, der vorderen Querseitenwand 11b, der hinteren Querseitenwand 11c und dem Boden 17 bildet ein zweites, im Umriß rechteckiges Behältnis, das der Aufnahme eines Katalogs, Ringbuchs oder dergleichen dient. Durch die in der Fig. 6 sichtbare schräge Anordnung des Behältnisses 18 wird der Platz für eine eingelegte Druckschrift im Unterteil 11 maximiert. Darüber hinaus kann man dadurch einen Katalog oder ein Ringbuch so in das Unterteil 11 einlegen, daß ein gegebenenfalls dickeres Ende, insbesondere wenn es sich um ein Ringbuch handelt, an der der Achse 12 zugewandten Seite des Unterteils liegt während das andere gegebenenfalls dünnere Ende des Ringbuchs der vorderen Querseitenwand 11b des Unterteils zugewandt ist. Soll das Unterteil 11 einen Katalog aufnehmen, der über seine Länge etwa gleichbleibende Dicke aufweist, so ist auch dies problemlos möglich, wobei die Dicke des Katalogs maximal dem noch verfügbaren Abstand entsprechen darf, der zwischen den an der vorderen Querseitenwand 11b angrenzenden Führungsleisten 18c und dem geschlossenen Deckel 16 gebildet wird.

Die Handhabung der erfindungsgemäßen Vorrichtung ist sehr einfach. Das Einschieben bzw. die Entnahme der Compact-Disc kann jederzeit erfolgen, wenn die Vorrichtung im Regal steht oder liegt und von ihrer Stirnseite her die Öffnung 19 für die Compact-Disc zugänglich ist. Zum Einlegen bzw. Herausnehmen eines Ringbuchs oder Katalogs wird hingegen die Vorrichtung aus dem Regal genommen, mit dem Boden 17 des Unterteils auf eine Unterlage gelegt, das Deckelteil 13 durch scharnierartiges Schwenken um die Drehachse 12 angehoben und der Katalog bzw. das Ringbuch in die geöffnete Aufnahme des Unterteils 11 eingelegt bzw. entnommen.

## Patentansprüche

1. Vorrichtung zur Aufbewahrung von Informationsmaterial, die aus einem größeren Behälter (11,13) zur Aufnahme von Druckschriften oder dergleichen und einem kleineren, fest mit diesem verbundenen Behältnis (18) zur Aufnahme von CD's besteht, wobei das kleinere Behältnis (18) im Innern des größeren Behälters untergebracht ist, wobei eine Zugangsmöglichkeit zum kleineren Behältnis (18) unabhängig von einer Zugangsmöglichkeit zum größeren Behälter (11,13) vorliegt und umgekehrt, und wobei das kleinere Behältnis (18) von außen zugänglich ist.

2. Vorrichtung nach Anspruch 1, dadurch gekennzeichnet, daß der größere Behälter aus einem Unterteil (11) und einem über eine Drehachse (12) drehbar mit diesem verbundenen Deckelteil (13) besteht und eine im Grundriß in etwa rechteckige Form aufweist.

3. Vorrichtung nach Anspruch 2, dadurch gekennzeichnet, daß das Deckelteil (13) aus einem Deckel (16), zwei Seitenwänden (13a) mit schrägen Auflageflächen (13b) besteht, wobei das Unterteil (11) zwei Längsseitenwände (11a) umfaßt und wobei die Seitenwände (13a) die Längsseitenwände (11a) von außen überdecken und mit diesen die Drehachse (12) aufnehmen.

4. Vorrichtung nach einem der Ansprüche 2 oder 3, dadurch gekennzeichnet, daß das Unterteil (11) aus zwei Längsseitenwänden (11a), einer vorderen Querseitenwand (11b), einer hinteren Querseitenwand (11c), einer Querleiste (20), zwei mit schrägen Auflageflächen (14a) versehenen Seitenteilen (14) und einem Boden (17) besteht.

5. Vorrichtung nach einem der Ansprüche 2 bis 4, dadurch gekennzeichnet, daß das kleinere Behältnis (18) mit etwa rechteckigem Grundriß innen auf dem Boden (17) des Unterteils (11) fest angebracht ist.

6. Vorrichtung nach einem der Ansprüche 4 oder 5, dadurch gekennzeichnet, daß das kleinere Behältnis (18) einen Boden (18d) aufweist und dieser in Bezug auf den Boden (17) des Unterteils nicht parallel, sondern schräg angeordnet ist und an seinem der Drehachse (12) zugewandten Ende an den Boden (17) des Unterteils angrenzt.

7. Vorrichtung nach Anspruch 6, dadurch gekennzeichnet, daß das kleinere Behältnis (18) zwei Längsseitenwände (18a) aufweist und sich von diesen aus rechtwinklig nach innen abgewinkelt, parallel zum Boden (18d) des kleineren Behältnisses zwei obere Führungsleisten (18c) erstrecken.

8. Vorrichtung nach einem der Ansprüche 1 bis 7, dadurch gekennzeichnet, daß die Tiefe des kleineren Behältnisses (18) kleiner ist als die Längsseite einer CD.

9. Vorrichtung nach einem der Ansprüche 4 bis 8, dadurch gekennzeichnet, daß das kleinere Behältnis (18) eine Öffnung umfaßt, die in einer schlitzartigen Öffnung (19) der vorderen Querseitenwand (11b) des Unterteils mündet, wobei sich diese schlitzartige Öffnung etwa in der Mitte der vorderen Querseitenwand des Unterteils befindet.

10. Vorrichtung nach einem der Ansprüche 4 bis 9, dadurch gekennzeichnet, daß die vordere Querseitenwand (11b) des Unterteils gegenüber dem Boden (17) des Unterteils soweit zur hinteren Querseitenwand (11c) des Unterteils hin zurückversetzt ist, daß von den Seitenteilen (14), dem Boden (17) und der Querleiste (20) ein rechteckiger Rahmen gebildet wird, wobei eine weitmöglichst in das Behältnis (18) eingeschobene CD nicht über die Flucht dieses Rahmens hinausragt.

## Claims

1. Device for storing information material consisting of a large container (11, 13) for receiving printed matter and a smaller container (18) fastened to the first container for receiving CD's, the smaller container (18) being positioned in the interior of the larger container, an access to the smaller container (18) being possible independently of the accessibility to the larger container (11, 13) and vice versa, and the smaller container (18) being accessible from the outside.

2. Device as claimed in claim 1, characterised in that the larger container consists of a lower part (11) and a cover part (13) pivotally connected thereto by means of a swivel axis (12) and comprises an approximately rectangular shape in the plan view.

3. Device as claimed in claim 2, characterised in that the cover part (13) consists of a cover (16) and to side walls (13a) with inclined bearing surfaces (13b), the lower part (11) comprising two longitudinal side walls (11a), the side walls (13a) covering the longitudinal side walls (11a) on the outside and receiving the swivel axis (12) therewith.

4. Device as claimed in any one of claims 2 or 3, characterised in that the lower part (11) consists of two longitudinal side walls (11a), a front transverse wall (11b), a rear transverse wall (11c), a transverse strip (20), two lateral parts (14) provided with inclined bearing surfaces (14a) and a bottom (17).

5. Device as claimed in any one of claims 2 to 4, characterised in that the smaller container (18) having an approximately rectangular shape in the plan view is fastened at the inside to the bottom (17) of the lower part (11).

6. Device as claimed in any one of claims 4 or 5, characterised in that the smaller container (18) comprises a bottom (18d) which is not arranged parallel, relative to the bottom (17) of the lower part, but in an inclined manner and borders on the bottom (17) of the lower part at its end facing the swivel axis (12).

7. Device as claimed in claim 6, characterised in that the smaller container (18) comprises two longitudinal side walls (18a), two upper guide strips (18c) extending at right angles from said side walls towards the inner side and parallel to the bottom (18d) of the smaller container.

8. Device as claimed in any one of claims 1 to 7, characterised in that the depth of the smaller container (18) is smaller than the longitudinal side of a CD.

9. Device as claimed in any one of claims 4 to 8, characterised in that the smaller container (18) comprises an opening leading to a slot-like opening (19) of the front transverse wall (11b), this slot-like opening being arranged approximately in the centre of the front transverse wall of the lower part.

10. Device as claimed in any one of claims 4 to 9, characterised in that the front transverse wall (11b) of the lower part is displaced to the back towards the rear transverse wall (11 c) of the lower part relatively to the bottom (17) of the lower part in such a manner that a rectangular frame is formed by the lateral parts (14), the bottom (17) and the transverse strip (20), a CD pushed into the container (18) as far as possible does not extend beyond the alignment of this frame.

## Revendications

1. Dispositif pour le rangement de supports d'information, qui consiste en un grand réceptacle (11,13) destiné à recevoir des imprimés ou des documents similaires et en un compartiment (18) plus petit fixé à demeure au grand réceptacle et destiné à recevoir des CD. où le petit compartiment (18) est placé à l'intérieur du grand réceptacle, où il existe une possibilité d'accès au petit compartiment (18) indépendante d'une possibilité d'accès au grand réceptacle (11,13) , et inversement, et où le petit compartiment (18) est accessible de l'extérieur.

2. Dispositif suivant la revendication 1, caractérisé en ce que le grand réceptacle consiste en une partie inférieure (11) et en une partie (13) faisant office de couvercle articulée sur la partie inférieure par l'intermédiaire d'un axe de pivotement (12), et présente, vue en plan, une forme sensiblement rectangulaire.

3. Dispositif suivant la revendication 2, caractérisé en ce que la partie (13) faisant office de couvercle consiste en un couvercle (16), en deux parois latérales (13a) avec des biseaux (13b), et où la partie inférieure (11) comporte deux parois latérales longitudinales (11a) et où les parois latérales (13a) recouvrent les parois latérales longitudinales (11a) de l'extérieur et reçoivent avec celles-ci l'axe de pivotement (12).

4. Dispositif suivant l'une ou l'autre des revendications 2 ou 3, caractérisé en ce que la partie inférieure (11) est constitué de deux parois latérales longitudinales (11a), d'une paroi latérale transversale avant (11b), d'une paroi latérale transversale arrière (11c), d'une nervure transversale (20), de deux éléments latéraux (14) présentant des biseaux (14a) et d'un fond (17).

5. Dispositif suivant l'une quelconque des revendications 2 à 4, caractérisé en ce que le petit compartiment (18) à plan sensiblement rectangulaire est fixé à demeure, à l'intérieur, sur le fond (17) de la partie inférieure (11).

6. Dispositif suivant l'une ou l'autre des revendications 4 et 5, caractérisé en ce que le petit compartiment (18) présente un fond (18d) et que celui-ci n'est pas placé parallèlement par rapport au fond (17), mais bien obliquement et touche, par son extrémité tournée vers l'axe de pivotement, le fond (17) de la partie inférieure.

7. Dispositif suivant la revendication 6, caractérisé en ce que le petit compartiment (18) présente deux parois latérales longitudinales (18a) et que s'étendent à partir de celles-ci, coudées à angle droit vers l'intérieur et parallèlement au fond (18d) du petit compartiment, deux nervures de guidage supérieures (18c).

8. Dispositif suivant l'une quelconque des revendications 1 à 7, caractérisé en ce que la profondeur du petit compartiment (18) est inférieur à la longueur d'un CD.

9. Dispositif suivant l'une quelconque des revendications 4 à 8, caractérisé en ce que le petit compartiment (18) comprend une ouverture qui débouche dans une ouverture en forme de fente (19) de la paroi latérale transversale avant (11b) de la partie inférieure, l'ouverture en forme de fente se trouvant à peu près au milieu de la paroi latérale transversale avant de la partie inférieure.

10. Dispositif suivant l'une quelconque des revendications 4 à 9, caractérisé en ce que la paroi latérale transversale avant (11b) de la partie inférieure est, par rapport au fond (17) de la partie inférieure, reculé en direction de la paroi latérale transversale arrière (11c) de la partie inférieure d'une distance telle qu'il est formé par les parties latérales (14), le fond (17) et la nervure transversale (20) un cadre rectangulaire, un CD engagé à fond dans le compartiment (18) ne dépassant pas le plan du bord de ce cadre.
